# EUROPÄISCHE PATENTSCHRIFT

(11) **EP 0 689 909 B1**
(45) Veröffentlichungstag und Bekanntmachung des Hinweises auf die Patenterteilung: **22.10.1997**
(21) Anmeldenummer: 95109399.6
(22) Anmeldetag: 17.06.1995
(51) Int. Cl.: B27L 5/06, B65G 19/26, B27B 25/04

(54) **Plattenkette für Maschinen zum spanlosen Abtrennen von Holzlamellen**
Platform-chain conveyer for slicing wood laminates
Chaîne transporteuse plane pour trancher des feuilles de bois

(30) Priorität: 28.06.1994 DE 4422457; 13.09.1994 DE 4432528; 11.10.1994 EP 94116004
(43) Veröffentlichungstag der Anmeldung: 03.01.1996
(73) Patentinhaber: Gebrüder Linck, Maschinenfabrik "Gatterlinck" GmbH & Co.KG, D-77704 Oberkirch (DE)
(72) Erfinder:
(74) Vertreter: Katscher, Helmut, Dipl.-Ing.

(56) Entgegenhaltungen:
- DE-C- 126 891
- DE-C- 568 173
- DE-C- 4 201 339

## Beschreibung

Die Erfindung betrifft eine Plattenkette für Maschinen zum spanlosen Abtrennen von Holzlamellen, die als endlos umlaufende angetriebene Andrückkette Holzteile gegen einen Holzführungstisch drückt und in Vorschubrichtung zu einem die Holzlamellen abtrennenden Messer fördert, wobei die Plattenkette mehrere, gelenkig miteinander verbundene Gliedplatten aufweist und unter einer Gruppe von Andrückrollen entlangbewegt wird.

Zum spanlosen Abtrennen von Holzlamellen werden die Holzteile entlang einem Holzführungstisch zu einem schräggestellten Messer gefördert, das jeweils eine Holzlamelle abtrennt. Zum Andrücken und zum Vorschub der Holzteile werden endlos umlaufende flexible Förderbänder oder Plattenketten (DE 42 01 339 C1) als angetriebene Andrückketten verwendet. Die Gliedplatten der Plattenketten sind an ihrer den Holzteilen zugekehrten Außenseite mit einem elastischen Belag versehen, durch den die Holzteile in Vorschubrichtung mitgenommen werden.

Es hat sich jedoch gezeigt, daß bei der Verwendung von flexiblen Materialien entweder in Form eines umlaufenden Andrückbandes oder in Form einer flexiblen Beschichtung oder eines Polsters auf starren Gliedplatten einer Plattenkette infolge der Verformbarkeit des flexiblen Materials die Anpressung der Holzteile gegen den Holzführungstisch und insbesondere im Bereich des Messers ungleichmäßig sein kann, so daß die abgetrennten Holzlamellen unterschiedliche Dicke aufweisen können.

Obwohl die Dicke der so erzeugten Holzlamellen nur in einem verhältnismäßig engen Toleranzbereich schwankt, können sich dadurch bei der Weiterverarbeitung doch Schwierigkeiten ergeben, beispielsweise wenn es sich bei den verarbeiteten Holzteilen um Parkettfriese handelt und die davon abgetrennten Holzlamellen anschließend zu mehreren zu einer Fertigparkett-Platte verleimt werden. Bereits geringe Schwankungen der Dicke der Holzlamellen führen dann zu unterschiedlichen Anpreßdrücken beim Verleimen der Holzlamellen mit einer Grundplatte.

Deshalb ist man bestrebt, eine sehr enge Dickentoleranz der abzutrennenden Holzlamellen einzuhalten. Hierfür ist eine exakte und gleichmäßige Anpressung beim Vorschub erforderlich. Eine aus starren Gliedplatten bestehende Plattenkette ohne flexible Beschichtung würde zwar eine solche gleichmäßige Andrückung der Holzteile gewährleisten; jedoch wäre eine solche ohne flexible Beschichtung ausgeführte Plattenoberfläche nicht geeignet, die Holzteile mit der für den Abtrennvorgang erforderlichen, verhältnismäßig hohen Vorschubkraft mitzunehmen.

Aufgabe der Erfindung ist es daher, eine Plattenkette der eingangs genannten Gattung so auszubilden, daß bei hoher und gleichmäßiger Andrückwirkung eine wirksame Übertragung der erforderlichen Vorschubkraft gewährleistet ist.

Diese Aufgabe wird erfindungsgemäß dadurch gelöst, daß an den Gliedplatten an ihrer den Holzteilen zugekehrten Außenseite jeweils eine zurückdrückbare Mitnehmerplatte gelagert ist, daß die Mitnehmerplatte im unbelasteten Zustand eine vorspringende, in Vorschubrichtung gerichtete Mitnahmekante bildet, und daß die den Holzteilen zugekehrten Außenflächen der Mitnehmerplatten im zurückgedrückten Zustand eine im wesentlichen ebene, die Holzteile gegen den Holzführungstisch drückende Andrückfläche bilden.

Durch die bewegliche Lagerung der Mitnehmerplatten wird eine formschlüssige Mitnahme der Holzteile in Vorschubrichtung erreicht, weil die Mitnahmekante jeweils hinter die Hinterkante eines Holzteils greift. Diese formschlüssige Mitnahme ermöglicht die Übertragung hoher Vorschubkräfte. Dagegen werden die Mitnehmerplatten in dem Bereich, wo sie an den Holzteilen anliegen, so zurückgedrückt, daß ihre Mitnahmekanten nicht mehr aus der ebenen Andrückfläche vorspringen. Die Mitnehmerplatten liegen mit ihren Andrückflächen flach an der Oberseite der Holzteile an und bewirken die erforderliche genaue Andrückung der Holzteile an den Holzführungstisch mit hoher Andrückkraft. Damit wird erreicht, daß die Holzlamellen mit gleichbleibender Dicke hergestellt werden, so daß eine sehr enge, für die Weiterverarbeitung bedeutsame Dickentoleranz eingehalten werden kann.

Aus der US 522 223 ist es zwar bekannt, an den einzelnen Kettengliedern eine Vorschubkette für Holzbearbeitungsmaschinen Mitnehmerklinken ausschwenkbar zu lagern. Diese Mitnehmerklinken bilden im ausgeschwenkten Zustand Mitnehmerzähne, die hinter die Hinterkante der Holzteile greifen.

Diese bekannte Vorschubkette liegt aber unter den zu fördernden Holzteilen und bildet nur eine Auflagefläche für die Holzteile. Hierbei erfolgt keine Anpressung gegen eine gegenüberliegende Tischfläche od.dgl., und zwar weder durch die Mitnehmerklinke noch durch die Kettenglieder.

Die DE 830 568 zeigt ebenfalls nur eine einfache Mitnehmerfunktion von ausschwenkbaren Mitnehmern, die an einer Vorschubkette für Holzstämme gelagert sind. Auch hierbei üben die Mitnehmer keinerlei Anpreßfunktion aus.

Gemäß einer bevorzugten Ausführungsform ist vorgesehen, daß die in Förderrichtung vordere Kante in der Mitnehmerplatte die Mitnahmekante bildet. Vorzugsweise ist die Mitnehmerplatte in ihrem der Mitnahmekante abgekehrten hinteren Bereich in einer Schwenklagerung an der Gliedplatte ausschwenkbar gelagert.

Damit wird in konstruktiv einfacher Weise und mit geringem Platzbedarf eine stabile und damit auch zur Übertragung von hohen Vorschubkräften geeignete bewegliche Lagerung der Mitnehmerplatten erreicht.

Im vorderen Bereich der Mitnehmerplatte kann zwischen dieser und der Gliedplatte mindestens eine Druckfeder angeordnet sein, die die Mitnehmerplatte im unbelasteten Zustand so ausschwenkt, daß deren Vorderkante die Mitnahmekante bildet.

Anstelle einer Schwenklagerung der Mitnehmerplatten an den Gliedplatten kann auch vorgesehen sein, daß die Mitnehmerplatten an den Gliedplatten senkrecht zur Kettenebene beweglich gelagert sind. Beispielsweise können die Mitnehmerplatten in Langlochführungen an den Gliedplatten beweglich geführt und gehalten sein. Auch hierbei kann vorgesehen sein, daß die Mitnehmerplatte durch Federkraft von der Gliedplatte weggedrückt wird.

Statt dessen ist es aber auch möglich, auf eine Feder zwischen der Gliedplatte und der Mitnehmerplatte zu verzichten und vorzusehen, daß im Untertrum der Plattenkette die jeweils nicht an einem Holzteil anliegenden Mitnehmerplatten ausschließlich unter Schwerkrafteinfluß eine Lage im Abstand zu den Gliedplatten einnehmen, um so die Mitnahmekante zu bilden, die formschlüssig an der Hinterkante des Holzteils eingreift.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 in vereinfachter Darstellungsweise in einer Seitenansicht eine Maschine zum spanlosen Abtrennen von Holzlamellen von Holzteilen,
Fig. 2 einen vergrößerten Teil-Längsschnitt durch die Plattenkette der Maschine nach Fig. 1,
Fig. 3 in einer Darstellung entsprechend der Fig. 2 eine abgewandelte Ausführungsform ohne Druckfeder zwischen der Gliedplatte und der Mitnehmerplatte und
Fig. 4 in einer Darstellung ähnlich der Fig. 3 eine demgegenüber abgewandelte Ausführungsform, bei der die Mitnehmerplatten an den Gliedplatten in Langlochführungen senkrecht zur Kettenebene beweglich gelagert sind.

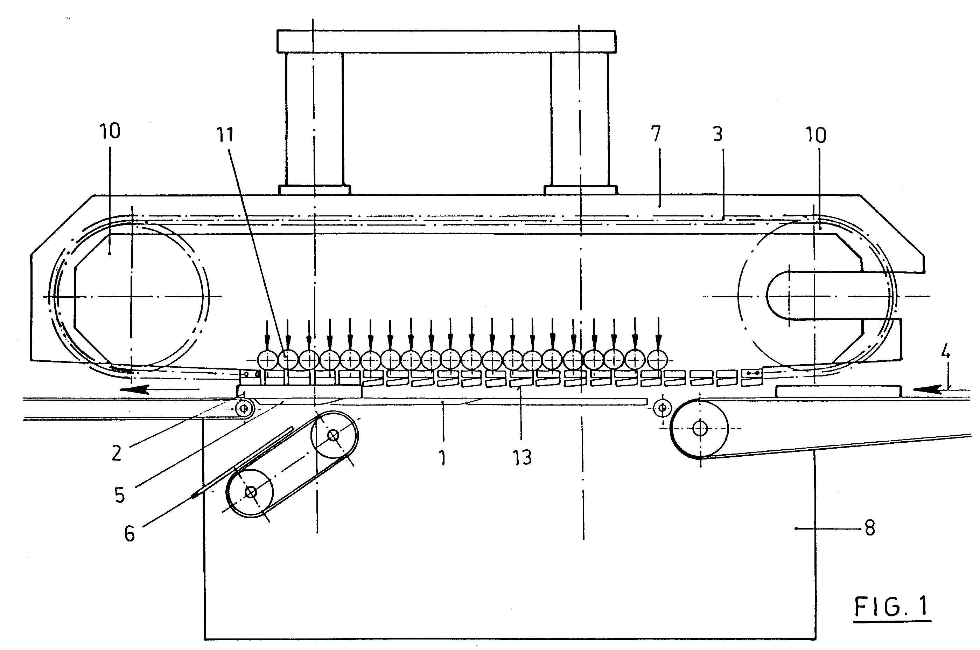

Die in Fig. 1 stark vereinfacht dargestellte Maschine weist einen Holzführungstisch 1 auf, dem Holzteile 2, beispielsweise Parkettfriese, von einer (nicht dargestellten) Zuführeinrichtung (vorn rechts in Fig. 1) zugeführt werden. Die Holzteile 2 gelangen in den Eingriff einer über dem Holzführungstisch 1 angeordneten, angetriebenen, endlos umlaufenden Andrückkette, die als Plattenkette 3 ausgeführt ist. Die Plattenkette 3 drückt die Holzteile 2 gegen die Holzführungsfläche und fördert sie in der durch den Pfeil 4 angedeuteten Vorschubrichtung gegen ein im Holzführungstisch 1 angeordnetes, schräggestelltes Messer 5. Das Messer 5 trennt von den Holzteilen 2 spanlos jeweils eine Holzlamelle 6 ab.

Die Holzteile 2 können der Maschine in mehreren Durchläufen zugeführt werden, wobei jedem Durchlauf eine Holzlamelle 6 abgetrennt wird. Zum Ausgleich der sich ändernden Dicke der Holzteile 2 ist die Plattenkette 3 in einem Tragrahmen 7 höhenverstellbar in einem Maschinengestell 8 aufgenommen.

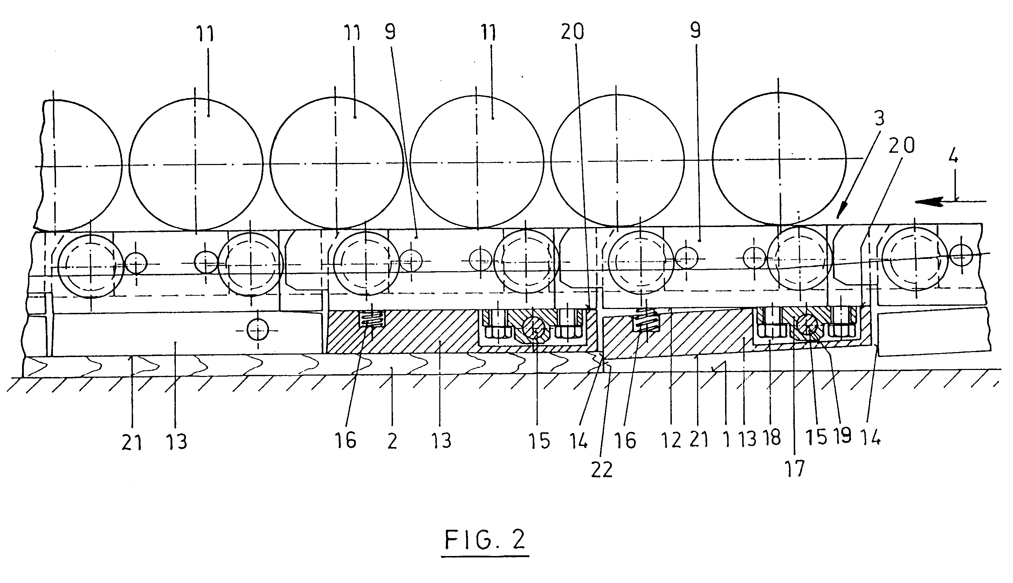

Wie in Einzelheiten in Fig. 2 dargestellt ist, weist die Plattenkette 3 Gliedplatten 9 auf, die nach Art einer Gliederkette gelenkig miteinander verbunden sind. Die Plattenkette 3 wird über Kettenräder 10 umgelenkt und angetrieben.

In dem über der Holzführungsfläche 1 liegenden Bereich wird das Untertrum der Plattenkette 3 an seiner Rückseite durch eine Gruppe von Andruckrollen 11 gestützt.

Die Gliedplatten 9 weisen jeweils an ihrer Außenseite 12, die im Bereich des Untertrums den Holzteilen 2 bzw. dem Holzführungstisch 1 zugekehrt ist, jeweils eine Mitnehmerplatte 13 auf. Die Mitnehmerplatten 13 sind ausschwenkbar an der jeweils zugeordneten Gliedplatte 9 gelagert. Die Mitnehmerplatte bildet mit ihrer in Förderrichtung vorderen Kante im unbelasteten, ausgeschwenkten Zustand (der rechts in Fig. 2 dargestellt ist) eine vorspringende, in Vorschubrichtung (Pfeil 4) gerichtete Mitnahmekante 14. In ihrem der Mitnahmekante 14 abgekehrten hinteren Bereich ist die ausschwenkbare Mitnahmeplatte 13 in einer Schwenklagerung 15 an der Gliedplatte 9 gelagert.

Im vorderen Bereich der Mitnehmerplatte 13 ist zwischen dieser und der Gliedplatte 9 mindestens eine Druckfeder 16 angeordnet, die die Mitnehmerplatte 13 in ihre ausgeschwenkte Stellung drückt.

Die Schwenklagerung 15 weist einen an der Außenseite 12 der Gliedplatte 9 angebrachten Lagerbock 17 auf, der in einer Ausnehmung 18 der Mitnehmerplatte 13 angeordnet ist. Eine Schwenkwelle 19 verbindet den Lagerbock 17 mit der Mitnehmerplatte 13.

Eine in Vorschubrichtung gesehen hinter der Schwenklagerung 15 der Mitnehmerplatte 13 angeordnete Anschlagfläche 20 kommt im ausgeschwenkten Zustand der Mitnehmerplatte 13, der rechts in Fig. 2 dargestellt ist, zur Anlage an der Außenfläche 12 der Gliedplatte 9 und begrenzt die durch die Druckfeder 16 bewirkte Schwenkung der Mitnehmerplatte 13 nach außen.

Die an der Oberseite der Holzteile 2 anliegenden Mitnehmerplatten 13 (links in Fig. 2) werden gegen die Kraft der Druckfeder 16 zurückgedrückt, so daß die den Holzteilen 2 zugekehrten Außenflächen 21 der Mitnehmerplatten 13 in diesem zurückgedrückten Zustand eine im wesentlichen ebene Andrückfläche für die Holzteile 2 bildet.

Die jeweils erste hinter einem Holzteil 2 befindliche, ausgeschwenkte Mitnehmerplatte 13 tritt mit ihrer Mitnahmekante 14 mit der Hinterkante 22 des Holzteils 2 formschlüssig in Eingriff, sobald das Holzteil 2 der Maschine mit etwas geringerer Geschwindigkeit als die Umlaufgeschwindigkeit der Plattenkette 1 zugeführt wird. Die Mitnehmerplatten 13 gleiten mit ihren glatten Außenflächen 21 um ein kleines Stück entlang der Holzoberfläche, bis die jeweils nächste Mitnehmerplatte 13 in der beschriebenen Weise in Eingriff mit der Hinterkante 22 des Holzteils 2 kommt.

Sobald die Plattenkette 1 im Bereich des Kettenrades 11 wieder von den Holzteilen 2 abgehoben wird, nehmen die Mitnehmerplatten 13 unter der Wirkung der Druckfedern 16 wieder ihre ausgeschwenkte Stellung ein, bis sie erneut an einem Holzteil 2 zur Anlage kommen.

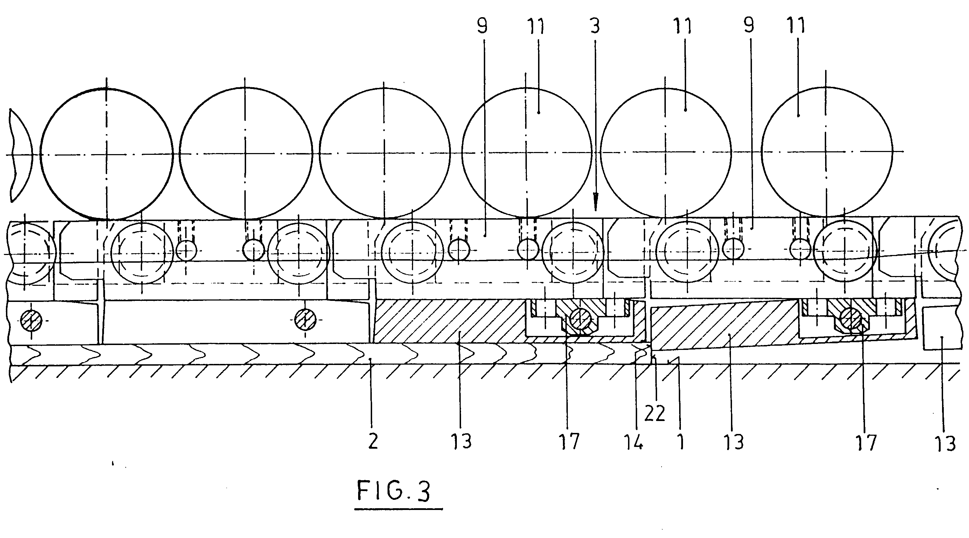

Die in Fig. 3 gezeigte Ausführungsform unterscheidet sich von der Ausführungsform nach Fig. 2 nur dadurch, daß auf die dort gezeigten Druckfedern 16 zwischen den Gliedplatten 9 und den Mitnehmerplatten 13 verzichtet wurde. Man erkennt, daß in dem über der Holzführungsfläche 1 entlanggeführten Untertrum der Plattenkette 3 die jeweils nicht am Holzteil 2 anliegenden Mitnehmerplatten 13 ohne Federkraft und ausschließlich unter Schwerkrafteinfluß ihre ausgeschwenkte Lage im Abstand zu den Gliedplatten 9 einnehmen.

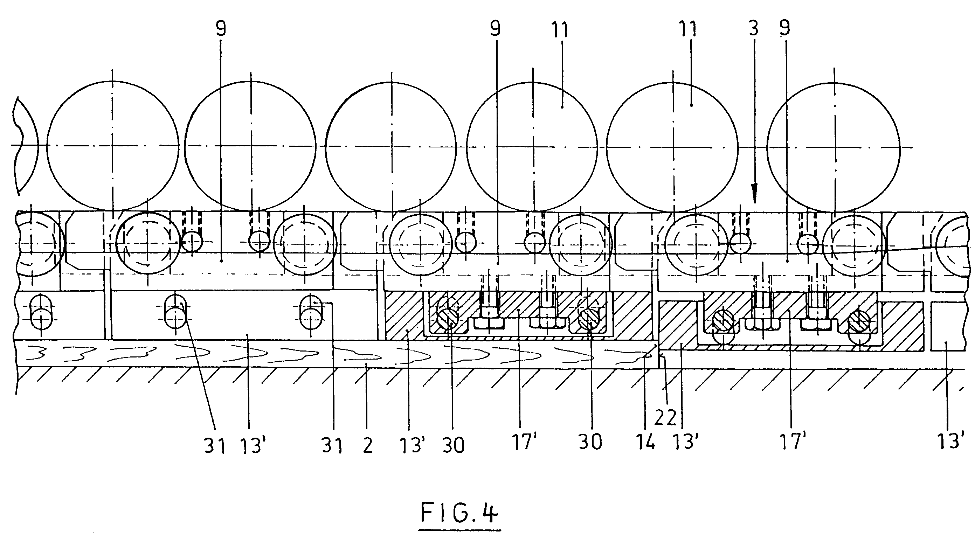

Die Ausführung nach Fig. 4 unterscheidet sich von der vorher beschriebenen Ausführungsform im wesentlichen dadurch, daß die Mitnehmerplatten 13' an den Gliedplatten 9 senkrecht zur Kettenebene beweglich gelagert sind. Zu diesem Zweck weisen die an den Gliedplatten 9 angeschraubten Lagerböcke 17' jeweils zwei querverlaufende Stifte 30 auf, die jeweils in Langlöcher 31 in den Seitenwänden der Mitnehmerplatten 13' eingreifen. Dadurch entstehen Langlochführungen, die eine Bewegung der Mitnehmerplatten 13' senkrecht zur Kettenebene ermöglichen.

Man erkennt aus Fig. 4, daß die am Holzteil 2 anliegenden Mitnehmerplatten 13' an den jeweils zugehörigen Gliedplatten 9 anliegen und von diesen gegen das Holzteil 2 gedrückt werden. Die jeweils nicht am Holzteil 2 anliegenden Mitnehmerplatten 13' (rechts in Fig. 4) nehmen unter Schwerkrafteinfluß eine Lage im Abstand zu der jeweils zugeordneten Gliedplatte 9 ein. Die erste hinter dem Holzteil 2 angeordnete Gliedplatte 13' bildet mit ihrer Vorderkante die Mitnahmekante 14, die mit der Hinterkante 22 des Holzteils 2 formschlüssig in Eingriff steht.

Ebenso wie bei der Ausführung der schwenkbar gelagerten Mitnehmerplatten 13 nach Fig. 2 kann auch bei den in Langlochführungen 30, 31 beweglich geführten Mitnehmerplatten 13' nach Fig. 4 vorgesehen sein, daß Druckfedern ähnlich den Druckfedern 16 nach Fig. 2 zwischen den Gliedplatten 9 und den Mitnehmerplatten 13' angeordnet werden, um diese von den Gliedplatten 9 wegzudrücken.

## Patentansprüche

1. Plattenkette für Maschinen zum spanlosen Abtrennen von Holzlamellen (6), die als endlos umlaufende angetriebene Andrückkette Holzteile (2) gegen einen Holzführungstisch (1) drückt und in Vorschubrichtung zu einem die Holzlamellen (6) abtrennenden Messer (5) fördert, wobei die Plattenkette (3) mehrere, gelenkig miteinander verbundene Gliedplatten (9) aufweist und unter einer Gruppe von Andrückrollen (11) entlangbewegt wird, dadurch gekennzeichnet, daß an den Gliedplatten (9) an ihrer den Holzteilen (2) zugekehrten Außenseite (12) jeweils eine zurückdrückbare Mitnehmerplatte (13, 13') gelagert ist, daß die Mitnehmerplatte (13, 13') im unbelasteten Zustand eine vorspringende, in Vorschubrichtung (4) gerichtete Mitnahmekante (14) bildet, und daß die dem Holzteil (2) zugekehrten Außenflächen (21) der Mitnehmerplatten (13, 13') im zurückgedrückten Zustand eine im wesentlichen ebene Andrückfläche bilden.

2. Plattenkette nach Anspruch 1, dadurch gekennzeichnet, daß die in Vorschubrichtung (4) vordere Kante der Mitnehmerplatte (13, 13') die Mitnahmekante (14) bildet.

3. Plattenkette nach Anspruch 2, dadurch gekennzeichnet, daß die Mitnehmerplatte (13) in ihrem der Mitnahmekante (14) abgekehrten hinteren Bereich in einer Schwenklagerung (15) an der Gliedplatte (9) ausschwenkbar gelagert ist.

4. Plattenkette nach Anspruch 3, dadurch gekennzeichnet, daß im vorderen Bereich der Mitnehmerplatte (13) zwischen dieser und der Gliedplatte (9) mindestens eine Druckfeder (16) angeordnet ist.

5. Plattenkette nach Anspruch 3, dadurch gekennzeichnet, daß eine hinter der Schwenklagerung (15) der Mitnehmerplatte (13) angeordnete Anschlagfläche (20) im ausgeschwenkten Zustand der Mitnehmerplatte (13) an der Giedplatte (9) zur Anlage kommt und die Schwenkung der Mitnehmerplatte (13) begrenzt.

6. Plattenkette nach Anspruch 3, dadurch gekennzeichnet, daß die Schwenklagerung (15) einen an der Außenseite (12) der Gliedplatte (9) angebrachten Lagerbock (17) aufweist, der in einer Ausnehmung (18) der Mitnehmerplatte (13) angeordnet ist, und daß eine Schwenkwelle (19) den Lagerbock (17) mit der Mitnehmerplatte (13) verbindet.

7. Plattenkette nach Anspruch 1 oder 2, dadurch gekennzeichnet, daß die Mitnehmerplatten (13') an den Gliedplatten (9) senkrecht zur Kettenebene beweglich gelagert sind.

8. Plattenkette nach Anspruch 7, dadurch gekennzeichnet, daß die Mitnehmerplatten (13') in Langlochführungen (30, 31) an den Gliedplatten (9) beweglich geführt und gehalten sind.

9. Plattenkette nach Anspruch 7, dadurch gekennzeichnet, daß die Mitnehmerplatte (13') durch Federkraft von der Gliedplatte (9) weggedrückt wird.

10. Plattenkette nach Anspruch 3 oder 7, dadurch gekennzeichnet, daß im Untertrum der Plattenkette die jeweils nicht an einem Holzteil (2) anliegenden Mitnehmerplatten (13, 13') ausschließlich unter Schwerkrafteinfluß eine Lage im Abstand zu den Gliedplatten (9) einnehmen.

## Claims

1. Platform-chain conveyor for slicing wood laminates (6) which, as an endless driven pressure chain, presses pieces of wood (2) against a wood guide table (1), conveys them in the direction of feed to a knife (5) which slices the wood laminates (6), where the platform chain (3) has several, link plates (9) hinged together, and is moved along under a group of pressure rollers (11), characterised in that a driver plate (13, 13'), which can be pushed back, is supported, in each case, on the outside (12) of the link plates (9) facing the pieces of wood (2), that the driver plate (13, 13') in an unloaded state, forms a projecting driving edge (14) facing the direction of feed, and that the outer faces (21) of the driver plates (13, 13') facing the piece of wood (2), form an essentially level contact surface when in their pushed-back position.

2. Platform-chain conveyor according to claim 1, characterised in that the front edge of the driver plate (13, 13') in the direction of feed (4) forms the driving edge (14).

3. Platform-chain conveyor according to claim 2, characterised in that the rear section of the driver plate (13) facing away from the driving edge (14) is mounted in a swivel bearing (15) on the link plate (9) so that it can be swung out.

4. Platform-chain conveyor according to claim 3, characterised in that in the front section of the driver plate (13), at least one compression spring (16) is located between said driver plate (13) and the link plate (9).

5. Platform-chain conveyor according to claim 3, characterised in that a stop face (20) located behind the swivel bearing (15) of the driver plate (13) bears against the link plate (9) when the driver plate (13) is in the swung-out position, thus limiting the swing of the driver plate (13).

6. Platform-chain conveyor according to claim 3, characterised in that the swivel bearing (15) has a pedestal (17) located on the outside (12) of the link plate (9), said pedestal being located in a recess (18) of the driver plate (13), and that a swivel shaft (19) connects the pedestal (17) to the driver plate (13).

7. Platform-chain conveyor according to claim 1 or 2, characterised in that the driver plates (13') are mounted on the link plates (9) perpendicularly to the plane of the chain, so that the driver plates (13') are mobile.

8. Platform-chain conveyor according to claim 7, characterised in that the driver plates (13') can be guided and held in slotted guides (30, 31) on the link plates (9).

9. Platform-chain conveyor according to claim 7, characterised in that the driver plate (13') is forced away from the link plate (9) by spring force.

10. Platform-chain conveyor according to claim 3 or 7, characterised in that on the return side of the platform-chain conveyor, the driver plates (13, 13') which are not bearing against a piece of wood (2), adopt a position at a distance from the link plates (9) purely under the influence of gravity.

## Revendications

1. Chaîne à plaques pour machines permettant la séparation, sans formation de copeaux, de lamelles de bois (6), qui se présente sous la forme d'un chaîne de pression entraînée en rotation sans fin, qui presse des pièces de bois (2) contre une table guide-bois (1) et les achemine dans la direction d'avancement vers un couteau (5) qui sépare les lamelles de bois (6), la chaîne à plaques (3) présentant plusieurs maillons en plaques (9) articulés les uns avec les autres et étant déplacée longitudinalement sous un groupe de rouleaux presseurs (11), caractérisée en ce que, respectivement, une plaque d'entraînement pressable en arrière (13, 13') est montée sur les maillons en plaques (9), sur leur face extérieure (12) tournée vers les pièces de bois (2), en ce que la plaque d'entraînement (13, 13') forme, à l'état non sollicité, une arête d'entraînement saillante (14) orientée dans la direction d'avancement (4), et en ce que les surfaces extérieures (21), tournées vers la pièce de bois (2), des plaques d'entraînement (13, 13') forment, a l'état pressé en arrière, une plaque de pression sensiblement plane.

2. Chaîne à plaques selon la revendication 1, caractérisée en ce que l'arête avant, dans la direction d'avancement (4), de la plaque d'entraînement (13, 13') forme l'arête d'entraînement (14).

3. Chaîne à plaques selon la revendication 2, caractérisée en ce que la plaque d'entraînement (13) est montée à pivotement sur un logement de pivot (15) du maillon en plaque (9) dans sa zone arrière opposée à l'arête d'entraînement (14).

4. Chaîne à plaques selon la revendication 3, caractérisée en ce qu'au moins un ressort de compression (16) est agencé dans la zone avant de la plaque d'entraînement (13), entre celle-ci et le maillon en plaque (9).

5. Chaîne à plaques selon la revendication 3, caractérisée en ce qu'une surface de butée (20) agencée derrière le logement de pivot (15) de la plaque d'entraînement (13) vient s'appuyer, lorsque la plaque d'entraînement (13) a pivoté, sur le maillon en plaque (9) et limite le pivotement de la plaque d'entraînement (13).

6. Chaîne à plaques selon la revendication 3, caractérisée en ce que le logement de pivot (15) présente un palier de support (17) monté sur la face extérieure (12) du maillon en plaque (9) et agencé dans un évidement (18) de la plaque d'entraînement (13), et en ce qu'un pivot (19) raccorde le palier de support (17) à la plaque d'entraînement (13).

7. Chaîne à plaques selon la revendication 1 ou 2, caractérisée en ce que les plaques d'entraînement (13') sont montées sur les maillons en plaques (9) de manière à pouvoir se déplacer perpendiculairement au plan de la chaîne.

8. Chaîne à plaques selon la revendication 7, caractérisée en ce que les plaques d'entraînement (13') sont guidées et maintenues dans leur déplacement dans des coulisses (30, 31) formées de trous longitudinaux ménagés dans les maillons en plaques (9).

9. Chaîne à plaques selon la revendication 7, caractérisée en ce que la plaque d'entraînement (13') est écartée du maillon en plaque (9) par un force élastique.

10. Chaîne à plaques selon la revendication 3 ou 7, caractérisée en ce que, dans le brin inférieur de la chaîne à plaques, les plaques d'entraînement (13, 13') qui ne s'appliquent respectivement pas sur une pièce de bois (2) assument une position à distance des maillons en plaques (9) exclusivement sous l'influence de la pesanteur.
